# EUROPEAN PATENT SPECIFICATION

(11) **EP 0 458 821 B1**
(45) Date of publication and mention of the grant of the patent: **24.07.1996**
(21) Application number: 90902977.9
(22) Date of filing: 06.02.1990
(51) Int. Cl.: G01S 13/75, G01S 13/76, G06K 7/10

(54) **TRANSPONDER SYSTEM**
TRANSPONDERSYSTEM
SYSTEME DE REPONDEUR

(30) Priority: 17.02.1989 AU 2800/89
(43) Date of publication of application: 04.12.1991
(60) Divisional application: 95203435.3
(73) Proprietor: INTEGRATED SILICON DESIGN PTY. LTD, Adelaide, South Australia 5000 (AU)
(72) Inventor: TURNER, Leigh, Holbrook, Paradise, S.A. 5075 (AU); COLE, Peter, Harold, West Lakes Shore, S.A. 5020 (AU)
(74) Representative: Price, Paul Anthony King
(86) International application number: AU9000043
(87) International publication number: WO9009707

(56) References cited:
- EP-A- 0 247 612
- EP-A- 0 254 954
- EP-A- 0 270 274
- EP-A- 0 287 175
- EP-A- 0 289 136
- WO-A-89/05067
- GB-A- 2 164 825
- GB-A- 2 165 723
- US-A- 4 019 181
- US-A- 4 040 053
- US-A- 4 075 632
- US-A- 4 349 916
- US-A- 4 630 044
- US-A- 4 724 427
- US-A- 4 857 893

## Description

The present invention relates to a Transponder System. In particular the invention relates to remote identification and telemetry systems wherein an electronic sub-system called an interrogator including a transmitter and receiver extracts by electromagnetic means useful information from an electronically coded label attached to a person or object about which information is desired.

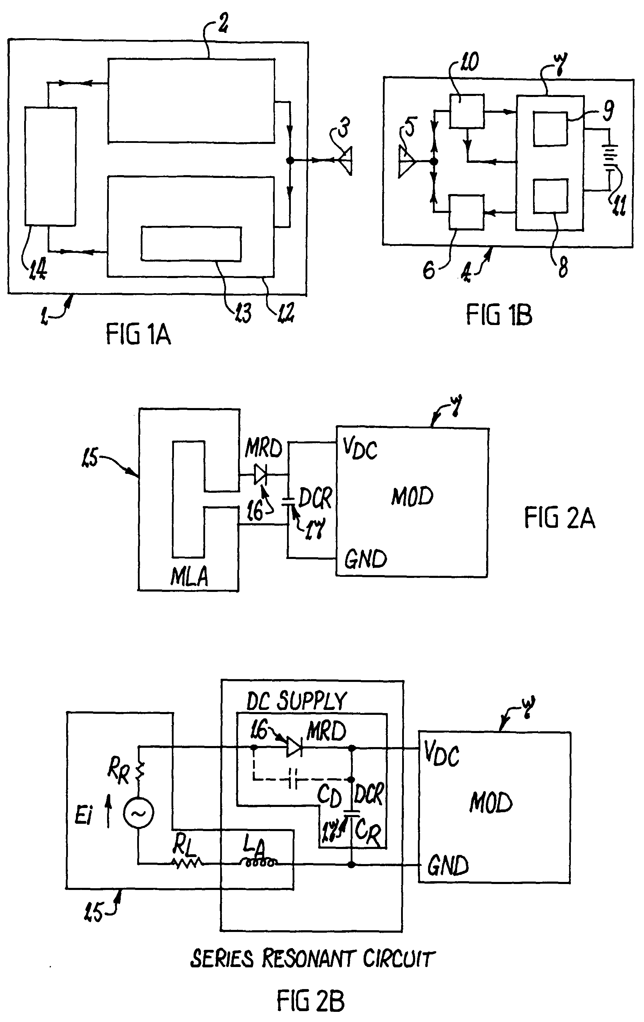

A block diagram of a type of system to which the invention relates is shown in accompanying Figs. 1A and 1B. This system uses the principle of radio frequency backscatter in which an interrogator containing a transmitter radiates an electromagnetic signal via an interrogator antenna toward an electronic label containing a label antenna. As a consequence of electromagnetic coupling between the label antenna and the interrogator antenna, the label receives a portion of the radiated signal. In the label, the impedance of a termination connected to the label antenna may be varied in time under control of a modulator containing an electronic code generator, with the result that electromagnetic energy received by the label antenna is both partially reflected by the termination and re-radiated by the label antenna in a time varying manner. As a further result of the electromagnetic coupling between the label antenna and the interrogator antenna, a portion of the time varying radio frequency signal scattered by the label may enter a receiver included within the interrogator wherein it may be separated from the transmitted signal, amplified, decoded in a decoder and presented in digital or analog form to other systems which may make use of the information obtained by the interrogation.

In the label, operations of the code generator and variable termination may be controlled in time by an oscillator. In a passive label the circuits within the modulator may receive power for their operation from a rectifier circuit, while in an active tag they may receive at least part of their operating power from a separate battery. When the rectifier circuit is present, the effects of the time varying termination can be provided by the rectifier circuit itself, in which variation of dc load directly presented to the rectifier by the modulator may cause a corresponding variation in the load presented by the rectifier to the label antenna.

In the interrogator, there may generally be provided a controller which may perform various calculation and control functions and may also participate in the decoding process.

Practical applications of such labelling and interrogation systems lie in identification of, and or monitoring condition of, such things as persons, goods, shipping containers, pets and livestock. In the latter case, the tags are sometimes attached to the exterior of the animal, and are sometimes implanted beneath the skin.

In the practical design of such systems various problems arise. In a passive tag, one problem is that of obtaining from the rectifier circuit sufficient voltage for operation of the modulator circuits within the label at a transmitter power level sufficiently low to meet licensing, economic or health requirements.

Another problem, which applies to both active and passive tags implanted beneath the hide of animals, derives from reflection of electromagnetic fields at the animal surface, and attenuation of those fields as they propagate into the interior. This reflection and attenuation serves to reduce strength of the electric field which reaches the label antenna, with the result that power available to operate the electronic circuit within the label and to provide re-radiated power is reduced.

A further problem, applying principally to passive labels, derives from significant variation in strength of the electromagnetic field normally experienced by a label as it moves throughout an electromagnetically scanned area. For the types of oscillator circuit which it is practicable to use in miniaturised integrated electronic labels, this variation of field strength and hence rectified dc voltage causes significant consequential variation in frequency of the on-chip oscillator which controls generation of the reply code. Since almost all forms of reply signal encoding employ time as an important parameter, such variation can cause difficulties or errors in decoding, or require that a significant portion of the information in the reply be devoted to the task of indication of frequency of the on-board oscillator. In normally used forms of reply signal decoding, circuits in the receiver must firstly detect the frequency of the modulation signal used in constructing a reply, and after this frequency is detected, determine reply signal information content. If the label is, by virtue of its motion, only exposed to the interrogation signal for a limited period, a portion of which is used in frequency determination, the amount of useful information which is recoverable from the label is limited by the problem discussed.

Although this problem can be alleviated to a degree by use of a voltage regulator within the label, the label rectifier system must then supply the sum of the voltage drop required across the regulator for satisfactory operation and the minimum operating voltage for the oscillator circuit, with the result that an effective reduction in label interrogation range occurs.

A further problem, which affects labels being read at all but very short distances, is that the reply signal reaching the interrogator antenna is very weak in relation to the interrogation signal and yet occupies a very similar region of the frequency spectrum. The usual technique for separation of the reply from the interrogation signal involves firstly use of a circulator or directional coupler to effect gross separation of signals flowing in the forward and reverse directions in the interrogator antenna transmission line, and then use of linear signal mixing to move the reply signal to a lower frequency band, wherein amplification and filtering may be conveniently applied.

In the gross separation discussed above, effectiveness depends upon the degree of isolation which may be achieved by the coupler or circulator, and also on the extent to which the interrogator antenna is matched to its transmission line, any imperfections in antenna matching having the same effect as imperfect isolation in the coupler or circulator. If insufficient matching is achieved, the mixer which effects frequency conversion of the reply signal will become overloaded by the imperfectly removed interrogation signal, and will not function properly. The result is that extremely accurate interrogator antenna matching is required for successful system operation at large interrogation ranges. Such extremely accurate matching cannot normally be sustained in the face of typically encountered changes in antenna environment, so the hoped for interrogation range is not achieved, even though the reply signal be well above both thermal noise and the level of other stray reflected signals in its passband.

A further problem is present in homodyne detection systems normally used for detection of the reply signal. In such systems a low power version of the transmitted signal is used in the interrogator receiver as the local oscillator for the linear mixer which transforms the reply signal to the previously said lower frequency band. Because the reply is derived by direct modulation within the tag of the transmitted signal, there will be phase coherence between the reply and the local oscillator derived from the transmitter. The result will be that the mixer will produce zero baseband output whenever the reply is in quadrature with the local oscillator, as indeed it will be whenever the difference in propagation time from the transmitter to mixer, via the tag and via the local oscillator sampling path, is a quarter of a period of the transmitter oscillation. Because in a radio frequency backscatter system the phase of the reply varies considerably as the label moves within the scanned area, this effect will produce positions of the label for which no reply is observed.

The usual way in which this problem is met is to divide the reply signal into two portions, each being fed to a separate mixer, the two mixers having local oscillator signals derived from the transmitter but with a ninety degree relative phase shift, the mixer outputs being again combined to a single data stream after one of them has been provided with a further ninety degree phase shift at the baseband frequency. Although this remedy does produce a form of baseband signal for all positions of the label, the baseband signal so obtained contains distortion which may prejudice successful decoding unless the spectrum of the signal is relatively narrowband, i.e. takes the form of a modulation signal of limited bandwidth superimposed on a significantly higher frequency sub-carrier. Since the frequency of this sub-carrier can be no greater than the frequency of the oscillator within the tag from which it is derived, and since considerations of economical use of power received by the tag set a practical upper limit to this frequency, the need in this kind of detection system to use a narrow-band modulation sets an unwelcome limit to the rate at which data may be transmitted within the reply, and a consequential limit to the amount of data which may be recovered from a label which by virtue of its motion may be within the interrogation field for only a short period of time.

US Patent No. US-A-4 630 044 discloses an automatic information exchange system in which an interrogation unit is arranged to emit a carrier signal at a first frequency and to receive a signal at a second, different frequency. A response unit, which can be carried by a moving object, includes a receiver for receiving the carrier signal at the first frequency and a memory for storing information relating to the object. An energy converter in the response unit derives operating power from the received signal to drive a signal generator to generate a signal at the second frequency containing the information stored in the memory. The system does not operate by the mechanism of backscatter, it does not contain a resonant circuit which at the energising frequency f1, is connected in a configuration which provides voltage magnification, and it does not contain any resonator, voltage magnifying or otherwise, of which the capacitance is substantially the capacitance of the rectifying diode.

European Patent Application No. EP-A-0 254 954 discloses a transponder for a remote identification system. The transponder includes a voltage doubling rectifier with a pair of diodes which are connected to a dipole antenna via an impedance matching section. The construction of the impedance matching section is not specified.

According to one aspect of the present invention there is provided a signal responding label for an identification and telemetry system, said label comprising: a radio frequency antenna for receiving an interrogation signal at an interrogation frequency and for scattering a reply signal; a generator of said reply signal; and a rectifier containing a diode for providing at least part of the power required by said generator; characterised in that said label includes a voltage magnifying resonator incorporating said diode, connected to said antenna and having a resonant frequency equal to said interrogation frequency; wherein stored electric energy of said resonator comprises substantially that present in the junction capacitance of said diode.

According to a further aspect of the invention there is provided an identification and telemetry system comprising:
a signal responding label comprising a label antenna for receiving an interrogation signal at an interrogation frequency and for scattering a reply signal; a generator of said reply signal; a rectifier system containing a diode and providing at least part of the power required by said generator, and
an interrogator comprising a transmitting antenna for transmitting said interrogation signal, a transmitter connected to said transmitting antenna and containing a generator of radio frequency energy, a receiving antenna for receiving said label reply signal, and a receiver connected to said receiving antenna for detecting and decoding said reply signal;
characterised in that said label includes a voltage magnifying resonator containing said diode and having a resonant frequency equal to the interrogation frequency and connected to said label antenna, wherein stored electric energy of said resonator comprises substantially that present in the junction capacitance of said diode.

Embodiments of the invention provide a passive radio frequency backscatter identification and telemetry system which possesses increased interrogation range while maintaining interrogation power within acceptable limits. Embodiments of the invention further provide a radio frequency backscatter tag or passive interrogatable label which allows convenient user coding of information content of the reply signal. The tag or label may be suitable for operation when implanted within animals and may be relatively immune to loss in sensitivity when placed in close proximity to electrically lossy objects. A radio frequency backscatter interrogation system embodying the present invention can enable reliable collection of data in the face of substantial variation in tag oscillator frequency, and can enable collection of relatively long data streams from rapidly moving objects. An identification and telemetry system embodying the present invention can permit simple detection and decoding of the reply signal.

Embodiments of the invention provide practical apparatus for remote identification and telemetering using electronic coded labels. In embodiments of the apparatus, an electronic label with an antenna receives radio frequency energy from an interrogation field created by the transmitter in an interrogator. Through the mechanism of modulated rf backscatter, in which the impedance connected to the label antenna may be periodically modulated by an electronic code generator circuit within the label, the label returns part of that energy in the form of a coded reply signal to a receiver in the interrogator.

The label contains a rectifier to convert a portion of the rf signal received by the label antenna to a direct current, for the purposes either of initiating operation of or providing power for the electronic code generating circuits.

The antenna is preferably designed to couple efficiently to the electromagnetic fields, in which the electric component of the field is weakened and the magnetic component is enhanced as a result of reflections at object surfaces, commonly encountered in the vicinity of practical objects to be labelled. An advantage of the use of a magnetic field responding antenna is that the effective interrogation range of the system may be increased in environments containing lossy dielectric media, such as occur when the labels are used in personnel or animal identification applications.

The effective interrogation range of the system is also enhanced by incorporation within the label of an optimally configured rf voltage magnifying resonator circuit, which may be placed between the label antenna and the dc rectifier system, with the result that the dc output voltage for a given incident rf field may be greatly increased.

A further enhancement of interrogation range may be achieved through pulse operation of the transmitter in the interrogator. This increase is a consequence of several factors. One is that for the label to operate correctly a certain threshold voltage must be reached in the output of the rectifier. The second is that health and radio licensing considerations limit the average power which may be used in the transmitter of the interrogator. Such pulse operation may greatly increase the operating voltage in the label for a given average operating power in the transmitter.

The interrogator of the system may contain means for improving the accuracy of decoding of replies from labels in which the oscillator frequency varies as the label moves within the often irregular interrogation field.

One method by which this may be achieved is by arranging the interrogator to capture a complete record of the label reply before an attempt to decode that reply is made. An advantage of the method of capture and decode later is that it may eliminate loss of part of the reply information which occurs in real time decoding circuits which require a period of synchronisation with the reply signal before they are effective, and hence may enable successful decoding of replies from labels which as a consequence of their motion, reside within the interrogation field for only a brief period. A further method is described below.

Embodiments of the invention may provide a compact circuit for reliable decoding of replies, containing frequency shift keying modulation, originating in practical labels in which oscillator voltage varies over reply time as a result of variation during label movement of the dc voltage developed in the label rectifier.

Embodiments of the invention may include a phase locked loop frequency decoder, together with a band-pass filter interposed between the frequency decoder and the circuit which interprets transitions in reply frequency, to recover a serial bit stream containing the reply code. An advantage of this circuit is that no special precautions to stabilise the power supply within the label may be required, and the label in consequence may operate with a smaller dc output voltage from the rectifier, and greater interrogation range results.

The interrogator may incorporate circuits for adaptive cancellation of variable reflections from non-label objects moving within the interrogator field of view. Such reflections, if not cancelled, can cause overload of sensitive detector circuits within the receiver. An advantage of cancellation of the reflections is that it may permit use of a much greater transmitter power than is otherwise practicable, with a consequent significant increase in interrogation range.

The reply code may be derived from a non-volatile electrically programmable and erasable memory. The reply code preferably is superimposed on a sub-carrier. The sub-carrier may be phase, amplitude or frequency modulated.

Preferred embodiments of the present invention will now be described with reference to the accompanying drawings wherein:
Figures 1A and 1B show major sub-units of an identification or telemetry system containing an interrogator and coded label;
Figures 2A and 2B show physical and circuit representations respectively of antenna and rectifier in one form of coded label;
Figures 3A and 3B show physical and circuit representations respectively of antenna and rectifier in a second form of coded label;
Figure 4 shows an internal arrangement of one form of label modulator;
Figure 5 shows an internal arrangement of a second form of label modulator;
Figure 6 shows an internal arrangement of a third form of label modulator;
Figure 7 shows a circuit representation of a third form of coded label;
Figure 8 illustrates four important functions performed within the coded label;
Fibure 9 is a block diagram of an interrogator for a coded label;
Figure 10 shows the structure of one form of baseband signal processor of an interrogator;
Figure 11 shows the structure of a second form of baseband signal processor of an interrogator, and the structure of a demodulator and decoder for a frequency shift keying encoded reply; and
Figure 12 shows the structure of an adaptive control block used in a reflection cancellation system of an interrogator.

Figure 1A shows major sub-units of an interrogator 1 containing a transmitter 2 which radiates via interrogator antenna 3 an electromagnetic signal toward an electronic label 4 shown in Figure 1B. Label 4 contains a label antenna 5. As a consequence of electromagnetic coupling between label antenna 5 and interrogator antenna 3 the label receives a portion of the radiated signal. In the label, the impedance of a termination 6 connected to label antenna 5 is varied in time under control of a modulator 7 containing an electronic code generator 8, with the result that electromagnetic energy received by label antenna 5 is both partially reflected by the termination and re-radiated by label antenna 5 in a time varying manner. As a further result of electromagnetic coupling between label antenna 5 and the interrogator antenna 3 a portion of the time varying radio frequency signal scattered by label antenna 5 enters receiver 12 included within interrogator 1 wherein it is separated from the transmitted signal, amplified, decoded in decoder 13 and presented in digital or analog form to other systems which may make use of the information obtained by the interrogation.

In the label, operations of code generator 8 and variable termination 6 are controlled in time by an oscillator 9. In a passive label circuits within modulator 7 receive power for their operation from a rectifier circuit 10, while in an active tag they receive at least part of their operating power from a separate battery 11. When rectifier circuit 10 is present, the effects of a time varying termination can be provided by the rectifier circuit itself, in which variation of dc load directly presented to the rectifier by the modulator causes a corresponding variation in load presented by rectifier circuit 10 to label antenna 5.

Interrogator 1, includes a controller 14 which performs various calculation and control functions and may also participate in the decoding process.

Figures 2A and 2B show one preferred embodiment of coded label. In Figure 2A physical aspects of some components are illustrated, while in Figure 2B, circuit aspects of the corresponding components are represented.

In the preferred embodiment shown in Figure 2A, the label contains a magnetic loop antenna (MLA) 15 connected to a rectifier circuit containing a microwave rectifier diode (MRD) 16 and dc reservoir capacitor (DCR) 17. The reservoir capacitor 17 is connected to a modulator (MOD) block 7, details of which will be described later.

In Figure 2B, circuit elements R_{R} and R_{L} represent radiation and loss resistance respectively of MLA 15, L_{A} represents self inductance of MLA 15, C_{D} represents junction capacitance of MRD 16, C_{R} represents capacitance of reservoir capacitor 17, and Eᵢ represents open circuit rf voltage induced in MLA 15 by reception of the interrogation signal.

In the system illustrated in Figure 2A, MLA 15 takes the form of an electrically small, ie. dimensions much less than a wave length, inductive loop, responding to the magnetic field component of the incident electromagnetic field. The dimensions of the loop are chosen to be as large as possible, consistent with the size requirements of the label and with a requirement that the self inductance of the loop forms at the frequency of interrogation a resonant circuit with the junction capacitance of rectifier diode 16.

The use of a small magnetic field responding antenna provides several benefits. Firstly the antenna is immune to sensitivity loss when placed in close proximity to lossy dielectric media, as often occurs with labels in practice, an example being when the label is used as a personnel identification or security tag. Secondly sensitivity of the label is enhanced when it is placed in the field of an electromagnetic wave reflected from a partially-conducting or well-conducting surface, as although such reflection causes a reduction in the electric field strength close to the reflecting medium, the magnetic field in that region is enhanced. In the extreme case when the label is to be implanted beneath the skin of an animal, enhancement of the magnetic field as opposed to the very substantial reduction of the electric field when the incident wave is reflected at the animal surface, provides a great increase in label sensitivity over labels using the commonly chosen electric dipole antenna.

Use in the label illustrated in Figure 2A of a magnetic field responding antenna carries another significant benefit. The extent to which it is possible to derive by reception from the interrogation field a sufficient voltage to provide satisfactory operation of electronic circuits in the modulator, depends firstly on the received voltage of the antenna, and secondly on the extent to which this voltage may be magnified by passive circuit techniques. The optimum circuit technique is to ensure that there is resonance at the frequency of interrogation between the junction capacitance of the rectifier diode and a low loss inductor, with dynamic impedance of the resonant circuit being well matched to the radiation impedance of the antenna. The voltage magnification achieved is equal to the quality factor of the resonant circuit. The choice of a magnetic field responding antenna allows this resonance to be achieved with particularly high quality factor, and with a minimum number of additional components, with a consequent reduction both of further electrical losses and physical size and cost of the label.

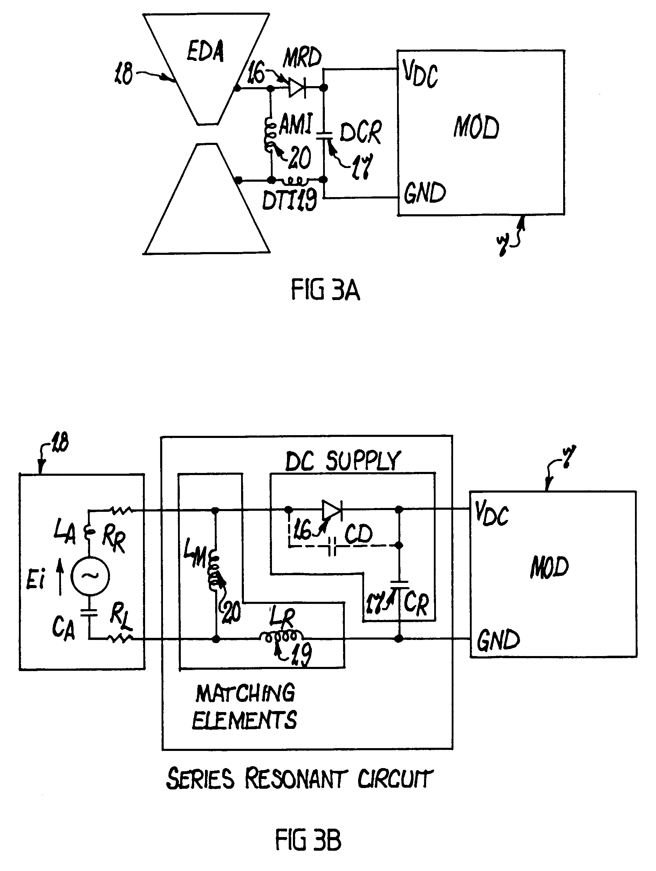

In another preferred embodiment, shown in Figure 3A, the label contains an electric dipole antenna (EDA) 18 connected to a rectifier circuit, again containing a microwave rectifier diode (MRD) 16 and dc reservoir capacitor (DCR) 17. Reservoir capacitor 17 is again connected to a modulator (MOD) block 7, the detail of which will be described later. The connection between EDA 18 and rectifier 16 this time contains an antenna matching inductor (AMI)20.

In Figure 3B, circuit elements R_{R} and R_{L} again represent radiation resistance and loss resistance of EDA 18, L_{A} and C_{A} represent frequency behaviour of EDA reactance, L_{M} represents inductance of the matching reactance, L_{R} represents inductance of the resonating reactance, C_{D} again represents junction capacitance of MRD 16, C_{R} again represents capacitance of reservoir capacitor 17 of the rectifier, and Eᵢ again represents open circuit voltage induced in EDA 18 by reception of the interrogation signal.

In the system illustrated in Figure 3A, EDA 18 may take the form of either an electrically large or small electric dipole. The dimensions of this antenna are normally chosen to be as large as possible consistent with size requirements of the label, and when a large antenna can be used the benefits of wide bandwidth and consequential relative immunity to detuning are realised.

Passive voltage magnification is in this embodiment realised through provision of resonating inductor 19 of which inductance L_{R} forms at the frequency of interrogation a resonant circuit with the junction capacitance of the rectifier diode. The functions of matching inductor (AMI) 20 are firstly to provide a dc return for the rectifier circuit, and secondly to ensure that radiation impedance of EDA 18 is well matched to the dynamic impedance of a voltage magnifying circuit. An important characteristic of the passive voltage magnifying circuit is that the stored electric energy of the resonance process is substantially that present in the diode junction capacitance. This is the condition for optimum passive voltage magnification with an electrically large antenna.

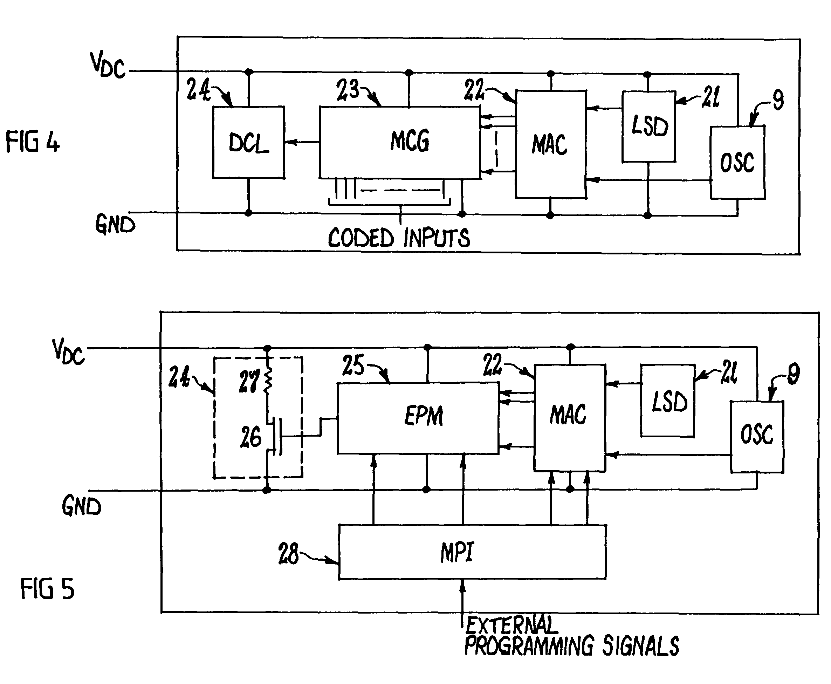

Figure 4 shows one preferred embodiment of label modulator 7. It contains a self contained oscillator (OSC) 9, a level sensitive detector (LSD) 21, a multiplexer address counter (MAC) 22, and a multiplexer code generator (MCG) 23, with inputs which are either left open or tied low to provide a digital one or zero respectively in the code, and a digitally controlled load (DCL) 24.

The label modulator comes into operation when the output voltage from the rectifier system 10 is sufficient to produce regular oscillations from the oscillator block 9, and also to cause the single bit digital output of level sensitive detector 21 to take a high state. When these conditions are met, multiplex address counter 22 cycles sequentially through all address states, so that the multiplexer samples in order all inputs, and produces at its output a cyclic repetition of the reply code programmed at those inputs. So that the code is produced without error, the threshold of operation of level sensitive detector 21 is set to a value at which reliable operation of the oscillator, counter and multiplexer circuits is assured. The output of the multiplexer code generator 23 is connected to a digitally controlled load 24, which provides the required variation in load presented to rectifier circuit 10 within the label.

In this modulation scheme, the multiplexer may provide simple amplitude modulation of the rf signal scattered by the label, or may if given a number of inputs substantially in excess of the number of bits to be encoded, implement a number of different modulation schemes including frequency shift keying and amplitude or phase modulation of a sub-carrier. Such modulation schemes are to be preferred to simple baseband modulation, as they suffer less in detection of replies from background clutter generated by naturally occurring objects in the field of view of the interrogator. Such modulation schemes can be generated by means other than that just described, most usually through interposition of an additional functional block between multiplexer code generator 23 and the digitally controlled load 24. Design of such functional blocks is a matter of ordinary skill and is not discussed here.

In generation of information to be contained within the reply code, some multiplexer inputs may be committed to the provision of identity information through being permanently either tied low or left open, while some may be connected to other circuits which provide in a telemetry application variable information. An example would be provided by connection, to one of the multiplexer inputs in an implanted animal label, of an output of a comparator of which the input is connected to a resistance bridge containing a thermally sensitive resistor. Such a label could provide an indication of animal indentity together with a single-bit indication of animal health. An obvious alternative method of including telemetry information is to make the frequency of the oscillator 9 an information bearing parameter. An example is provided by an implanted animal label in which natural temperature dependence of certain designs of oscillator circuit may be used to indicate animal temperature.

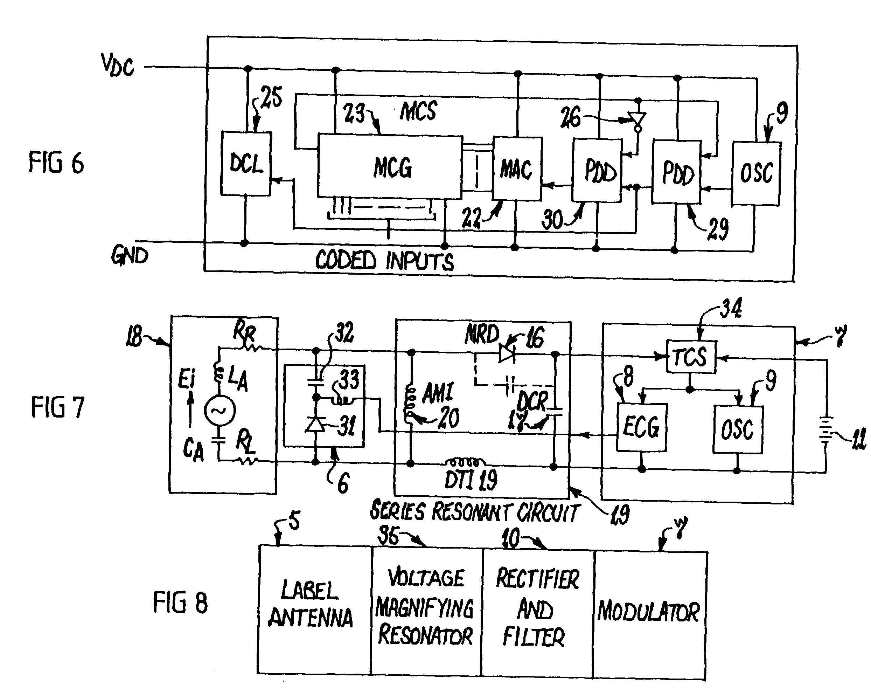

Figure 5 shows another preferred embodiment of modulator 7. It substitutes an electrically programmable and erasable memory (EPM) 25 for the previously discussed multiplexer code generator 23, but in other ways resembles the structure shown in Figure 4.

Figure 5 also shows a possible realization of digitally controlled load 24 in the form of a field effect transistor 26 with current limiting resistor 27. By appropriately proportioning transistor 26 and resistor 27, an impedance vs voltage characteristic matching the characteristic of the dc supply output impedance vs voltage level over a suitable range of power level may be achieved.

Programming of memory 25 is achieved through programming interface (MPI) 28, which may accept external programming signals either by direct connection or appropriate non-contact electromagnetic coupling means.

Figure 6 shows another preferred embodiment of modulator 7, suited to efficient generation of a reply signal with frequency shift keying modulation.

In this embodiment oscillator 9 runs at a rate significantly greater than either of the modulation frequencies, and is counted down by programmable digital counter (PDD) 29, which may effect under control of a mode control signal MCS a count of either eight or ten. As well as being fed to digitally controlled load 25 to effect modulation of antenna impedance, the output of divider 29 is fed to the clock input of a similar programmable digital divider 30, of which the mode control input is the complement of that reaching divider 29. The result of these connections is that the combined count of both dividers is always a factor of eighty, and the output of the second divider can provide a constant bit rate signal which is used as described in the paragraph below.

The output of divider 30 is used as a clock signal for multiplexer address counter (MAC) 22, the output of which, as in the modulator of Figure 4, cycles sequentially through all address states, so that multiplexer code generator (MCG) 23 again samples in order all inputs, which are either left open to represent a one or tied low to represent a zero, and produces at its output a cyclic repetition of the reply code programmed at those inputs. The output of multiplexer code generator 23 is used as the mode control signal MCS of counter 29, and is complemented by inverter 26 to provide the mode control signal of counter 30.

The overall effect of the modulator is to produce a frequency shift keying modulation signal with modulation frequencies equal to the oscillator frequency divided by either eight or ten, and a bit period equal to eighty times the period of oscillator 9.

Figure 7 shows another preferred embodiment of label in which the label again contains an electric dipole antenna (EDA) 18 of which the circuit representation is shown. EDA 18 is connected to a rectifier circuit, again containing a microwave rectifier diode (MRD) 16 and dc reservoir capacitor (DCR) 17. In this embodiment reservoir capacitor 17 is again connected to modulator 7, but the dc output voltage developed in capacitor 17 serves only to activate timed control switch (TCS) 34, which connects for a period of time after the said dc voltage is detected, power from battery 11 to oscillator (OSC) 9 and electronic code generator (ECG) 8.

Because power for operation of those circuits comes from a battery, and the rectifier system is required only to provide the negligible power required to initiate opening of the control switch, the quality factor and hence voltage magnification of the tuned circuit containing the rectifier capacitance can be higher than in the previously discussed designs. The result is a significant increase in interrogation range for the label.

In accord with the different use in this embodiment of label of the dc voltage from the rectifier, modulation of the antenna terminating impedance is provided directly through control of antenna termination 6, rather than through modulation of the impedance connected to the rectifier. Components comprising the controllable antenna termination are PIN diode 31, bypass capacitor 32 and rf isolation inductor 33. After modulation is applied, the timed control switch derives its operating power from battery 11. This direct control of the antenna terminating impedance can produce very efficient rf backscatter signal generation.

Figure 8 shows important fuctional charcteristics of the label circuits illustrated in Figures 2B, 3B and 7, and may be used to better explain the operation of those circuits. In each of the embodiments shown in those figures, the label contains a label antenna 5, a voltage magnifying resonator 35, a rectifier and filter 10, and a modulator 7.

Several characteristics of these functional blocks may be noted. The first is that the physical elements which provide the indicated functions are in some cases shared between blocks. Examples of this sharing include the self inductance of the magnetic antenna loop in Figure 2B which provides the resonating inductance of the voltage magnifying resonator, and the microwave diode in Figures 2B, 3B and 7 which provides both the resonating capacitance of the voltage magnifying resonator, and the unidirectional current element of the rectifier and filter. The second is that the electrically important circuit element is in one case the aberrant (stray) rather than the principal characteristic of the circuit device used. This statement refers to the voltage magnifying resonator, in which the electrical energy storage element is the junction capacitance of the rectifier diode.

It is the characteristics just mentioned which provide for maximisation in each of the three embodiments of passive voltage gain of the circuit, and consequent maximisation of interrogation range for given interrogation power.

In practical application of principles outlined in relation to Figures 2, 3 and 7, it is necessary to take into account the fact that diode junction capacitance depends on excitation level, and to adjust the size of the resonating inductance L_{A} or L_{R} for a desired operating signal level in the label.

In the design of efficient voltage magnifying resonators, it is sometimes convenient to use distributed circuit elements such as strip line or cavity resonators. Although in such cases electric energy stored within the resonator may no longer be substantially that within the junction capacitance of the rectifier diode, the higher quality factor of dynamic energy storage obtained with distributed circuit elements still allows substantial voltage magnification.

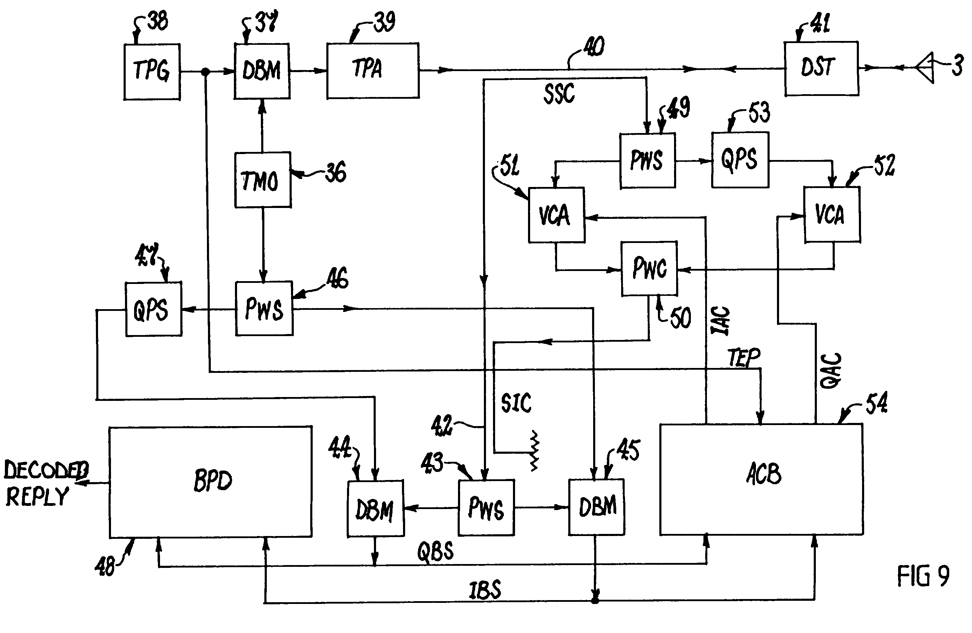

Figure 9 shows a block diagram of one preferred embodiment of interrogator. The interrogation signal has its origin in radio frequency transmitter master oscillator (TMO) 36, which is pulse modulated by means of double balanced mixer (DBM) 37, of which the control input is derived from transmitter pulse generator (TPG) 38. The modulated output of mixer 37 is applied to transmitter power amplifier (TPA) 39, and is conveyed to interrogator antenna 3 by means of signal sampling directional coupler (SSC) 40 and double screw tuner (DST) 41, the function of which will be described shortly.

There is an important practical consequence of the use of pulse modulation in the transmitter output signal, in that modulation with an appropriate duty cycle allows a significant increase in peak transmitter output power, while average output power still remains within limits set by radio licensing and health requirements. This increase in output power allows the dc voltage required to operate the label circuits to be developed at significantly greater interrogation range, or with labels in unfavourable interrogation situations such as implanted within tissue. Since data rates at which rf backscatter labels reply are normally much greater than achieved with low frequency transponders, interrogation pulses can be made sufficiently short and hence interrogations sufficiently frequent to enable data retrieval from even rapidly moving objects. Pulse operation of the transmitter also reduces power dissipation and heat generation in interrogator electronics.

As is clear from the discussion of the preferred embodiment, shown in Figure 4, of the functions of the label modulator 7, self contained oscillator (0SC) 9, multiplexer address counter (MAC) 22 and multiplexer code generator (MCG) 23, the length of the interrogation pulse should, in a system using pulsed interrogation and that embodiment of label modulator, be sufficient to produce coherent oscillations from the oscillator block for a period of time sufficient for the label to produce at least one complete reply.

The reply signal which is received from the label via the interrogator antenna 3 is separated from the transmitted signal by signal sampling directional coupler 40, and conveyed via the main line of a signal injection coupler (SIC) 42, to a power splitter (PWS) 43, wherein it is divided into two paths and reticulated to the signal ports of doubly balanced mixers (DBM) 44 and 45. The local oscillator ports of those mixers are fed from transmitter master oscillator 36 via power splitter (PWS) 46, with one of the signals emergent from splitter 46 being subject to a ninety degree phase shift in quadrature phase shifter (QPS) 47. Outputs IBS and QBS of balanced mixers 44 and 45 therefore represent in-phase and quadrature components of the signal received by the interrogator, translated downward by an amount equal to the interrogation frequency. The outputs IBS and QBS of signal mixers 44, 45 are fed to baseband processor and decoder (BPD) 48, from which the decoded reply is determined by means to be explained later.

The function of double screw tuner 41 can now be explained. Its principal purpose is to prevent overload of signal ports of balanced mixers 44 and 45 from occurring either through imperfect matching of interrogator antenna 3 to its transmission line, or through the existence in practice of imperfect directivity in signal splitting coupler 40. Appropriate adjustments of tuner screws can produce reflections which can cancel unwanted coupling which can arise from either of the mechanisms just mentioned between transmitter power amplifier 39 and receiver mixers 44 and 45, with the result that quite high transmitter powers can be used before those mixers become overloaded.

Such adjustment, which is normally manually performed during assembly and test of the interrogator, using observation of the waveform present at the outputs QBS and IBS of mixers 44 and 45 respectively as the adjustment criterion, is of considerable benefit in enhancing receiver sensitivity, but cannot remain fully effective in the face of variations in antenna reflection factor which occur as a result of objects moving in the field of interrogator antenna 3. Significant improvement in interrogator sensitivity may be achieved in the face of such variation if cancellation of unwanted coupling is made self-adjusting.

For this purpose, a portion of transmitter power is sampled by means of a further port of signal splitting coupler 40, and fed to power splitter (PWS) 49. The two equal amplitude outputs of power splitter 49 are recombined in power combiner (PWC) 50 after each has experienced some attenuation in one of the voltage controlled attenuators (VCA) 51 or 52, and one of them has been subject to a ninety degree phase shift in quadrature phase shifter (QPS) 53. The output of power combiner 50 is re-inserted into the reply signal chain by means of previously mentioned signal injection coupler 42.

The effect of the system just discussed is that means are provided to cancel, within amplitude limits, a residual transmitter antenna mismatch of any amplitude and phase.

So that this reflection can be automatically adjusted, the control signals for the voltage controlled attenuators are derived by means of an adaptive control block (ACB) 54, which takes its inputs from the in-phase and quadrature reply signal mixers 44 and 45, and from the transmitter pulse generator 38, and determines between each interrogation pulse the voltages required to be fed to control ports of voltage controlled attenuators 51 and 52.

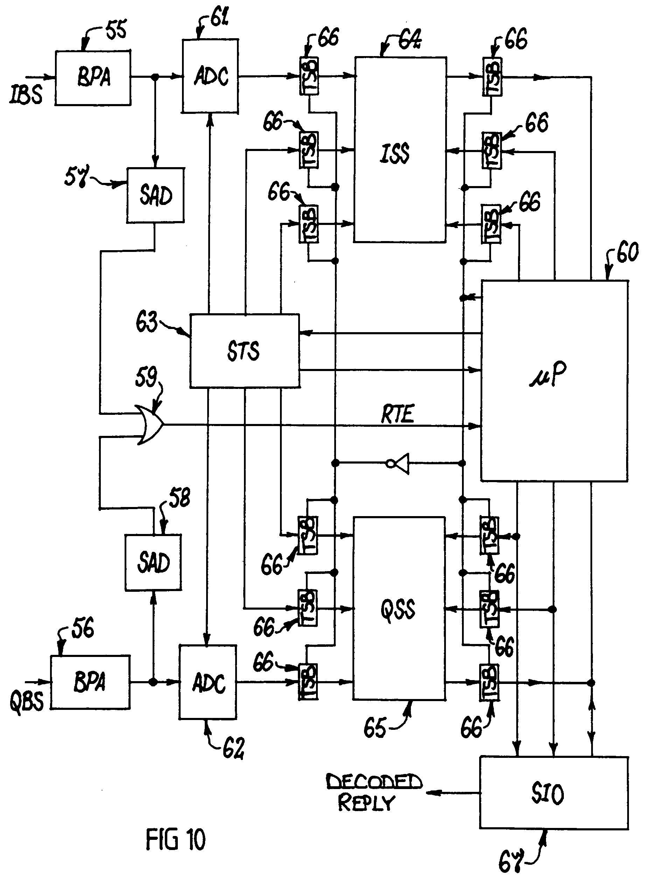

Figure 10 shows a block diagram of one preferred embodiment of baseband processor and decoder 48. In this embodiment baseband signals IBS and QBS from receiver mixers 44 and 45 are first amplified in band pass amplifiers (BPA) 55 and 56, with amplitudes of the signals being detected in signal amplitude detectors (SAD) 57 and 58. The function of signal amplitude detectors 57, 58 is to allow detection of when a reply signal is being received from a label, so that a record of the reply can be made for later decoding. To accomplish this detection, the outputs of signal amplitude detectors 57 and 58 are combined in OR gate 59, the result RTE being fed to microprocessor (µP) 60 which controls operations within the baseband processor and decoder.

When the occurrence of a reply is so detected, a digital record of the reply signal in both in-phase and quadrature channels is made and is stored within the memory of microprocessor 60. The digital representation of the reply is prepared by fast analog to digital converters (ADC) 61 and 62, operating under control of sampling timing system (STS) 63, which generates when required the sequence of memory address and control signals required to place regularly obtained digital samples of band pass amplifier 55, 56 outputs into memory blocks (ISS) 64 and (QSS) 65. A series of tri-state buffers (TSB) 66 allow the same memory blocks to be placed when required directly within microprocessor 60 address space.

Decoding operations performed within this baseband processor and decoder are performed by software, within microprocessor 60, in the time intervals between interrogator pulses, after each record of the reply has been completed, the period of each interrogation pulse being sufficient for collection of a complete reply. Advantages of performing decoding in this way are that complex signal recovery from noise algorithms may be used, that decoding can deal with signals of large fractional bandwidth, that irregularities in the reply may be flexibly detected and discounted, and that no part of the reply is lost in initial synchronisation between the reply signal and real time decoding circuits which may have been used as an alternative.

The reply signal when decoded is available whenever required via serial interface (SIO) 67 of microprocessor 60.

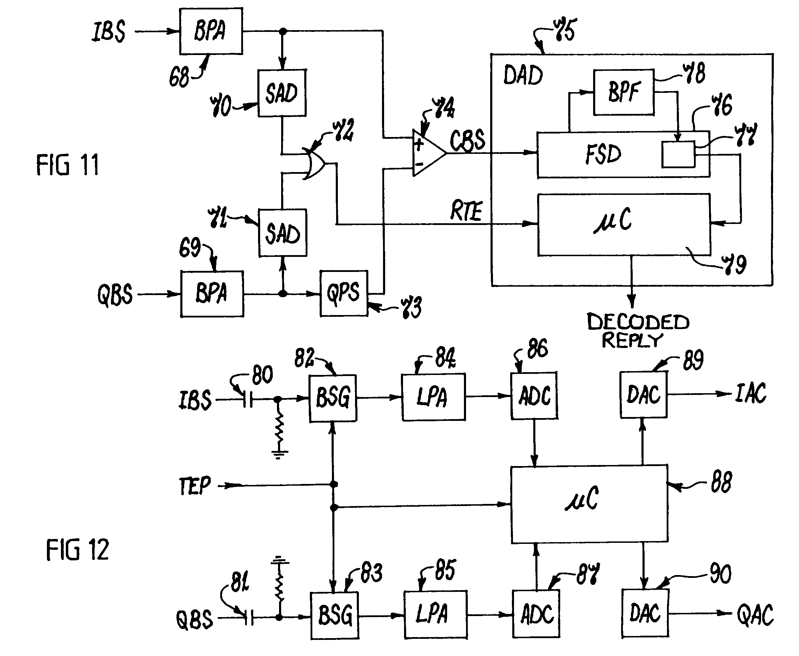

Figure 11 shows a block diagram of another preferred embodiment of baseband processor and decoder 48. As in Figure 10, this circuit provides band pass amplifiers (BPA) 68 and 69 for outputs IBS and QBS from receiver mixers 44 and 45. For the amplified baseband signals, signal amplitude detectors (SAD) 70 and 71, the outputs of which are combined in OR gate 72 to produce reply threshold exceeded signal RTE, are again provided.

The balance of the processing however differs considerably from that described in relation to Figure 10. In the present embodiment, the reply signal generation scheme used in the labels is assumed to produce a reply signal modulation superimposed on a sub-carrier, and amplified mixer output signals are assumed to be of small fractional bandwidth. These signals are combined, after amplification and after the quadrature signal has been subject to a further ninety degree phase shift in quadrature phase shifter (QPS) 73, in difference amplifier 74. The composite baseband signal CBS produced by difference amplifier 74 is fed together with the RTE signal to demodulator and decoder (DAD) block 75.

The contents of demodulator and decoder block 75 depend on the form of modulation employed within the label to provide an expression of the reply code. The present example shows the components which will accomplish real time demodulation and decoding of signals encoded by frequency shift keying. These components consist simply of a standard frequency shift keying decoder circuit (FSD) 76, such as the EXAR XR-2211, incorporating a zero crossing detector 77, and operating in conjunction with a band pass or low pass filter 78 and simple microcontroller (µC) 79, such as a Motorola MC68HC11.

In operation of this circuit, FSK decoder 76 produces at its first output a waveform proportional to reply modulation frequency. This waveform is subject to band pass or low pass filtering in filter 78, and the filter output is applied to zero crossing detector 77, which produces the second output of decoder 76. Microcontroller 79 recognises transitions in voltage level of the waveform produced by detector 77, and decodes the serial bit stream so found. The decoded reply resides in microcontroller memory, and emerges, when called for, from the serial port of that device.

An advantage of use of frequency shift keying in the label, and a phase locked loop frequency shift decoder in the interrogator, is that they together provide a very compact decoding process for reply modulation. The reply signal frequency is by this means readily converted to an equivalent voltage as the phase locked loop simply tracks variations in label oscillator frequency, even when that frequency varies over a significant range due to variations in label rf excitation level and hence rectified dc supply voltage.

The advantage of use of band pass filtering in the demodulation process just discussed is that slow variations in label oscillator frequency caused by variation in dc voltage developed in the label rectifier circuit as the label moves within the interrogation field will not cause error in interpretation of information content of the reply.

Although Figure 11 shows as contents of the demodulator and decoder block, components which are appropriate to an FSK modulation produced in the label, other simple contents can be used for other forms of modulation.

Figure 12 shows detail of one embodiment of adaptive control block 54 of the interrogator. The input signals are baseband signals IBS and QBS from receiver mixers (DBM) 44 and 45. These signals are stripped of their dc component, which can arise from interaction of local oscillator excitation and imperfect balance of the mixers, by capacitors 80 and 81. Transmission gates (BSG) 82 and 83 operating under control of transmitter enable pulse TEP, subsequent amplifiers (LPA) 84 and 85, and analog to digital converters (ADC) 86 and 87 ensure that at the end of each transmission period, digital representations of mixer outputs during transmitter-on period are available to microcontroller (µC) 88. During the period between transmissions, microcontroller 88 makes a calculation of required adjustment in control signals for voltage controlled attenuators (VCA) 51 and 52 in the receiver, and generates fresh values of those signals by means of digital to analog converters (DAC) 89 and 90, for presentation to attenuators 51 and 52 before the next transmission period.

## Claims

1. A signal responding label (4) for an identification and telemetry system, said label comprising: a radio frequency antenna (5, 15, 18) for receiving an interrogation signal at an interrogation frequency and for scattering a reply signal; a generator (8) of said reply signal; and a rectifier (10) containing a diode (16) for providing at least part of the power required by said generator (8); characterised in that said label includes a voltage magnifying resonator (35) incorporating said diode (16), connected to said antenna and having a resonant frequency equal to said interrogation frequency; wherein stored electric energy of said resonator (35) comprises substantially that present in the junction capacitance (C_{D}) of said diode (16).

2. A signal responding label as claimed in claim 1 wherein said voltage magnifying resonator (35) contains an inductance (L_{A}) and a capacitance (17).

3. A signal responding label as claimed in claim 1 or 2 including a termination impedance (6) connected to said antenna and means (7) for varying the termination impedance in accordance with the reply signal so that a portion of the interrogation signal is scattered by said antenna.

4. A signal responding label as claimed in claim 1 or 2 wherein the rectifier (10) is connected to said resonator (35) so that at the interrogator frequency there is negligible impedance between either terminal of the rectifier (10) and one of the elements of the resonator (35).

5. A signal responding label as claimed in claim 3 wherein said means for varying the termination impedance (6) is provided by said voltage magnifying resonator (35).

6. A signal responding label as claimed in claim 5 wherein variation in the termination impedance (6) is effected by means for varying load current drawn from the rectifier (10).

7. A signal responding label as claimed in claim 6 wherein said means for varying load current comprises a transistor (26) in series with a resistor (27).

8. A signal responding label as claimed in claim 1 or 2 wherein said reply signal contains as its information content a reply message and the output signal of the rectifier (10) is used to initiate activity of said generator (8) for a period sufficient for generation of at least one complete label reply message.

9. A label as claimed in claim 1 wherein said antenna comprises a magnetic field responding antenna.

10. A label as claimed in claim 1 wherein said reply signal comprises a reply code superimposed on a sub-carrier.

11. A label as claimed in claim 10 wherein said sub-carrier is frequency modulated.

12. A label as claimed in claim 10 wherein said sub-carrier is phase modulated.

13. A signal responding label as claimed in claim 1 wherein the radiation impedance of said antenna is well matched to the dynamic impedance of the voltage magnifying resonator (35).

14. A signal responding label as claimed in claim 1 wherein the antenna takes the form of a magnetic loop (15). the self inductance (L_{A}) of which provides the inductance forming the voltage magnifying resonator (35).

15. A signal responding label as claimed in claim 7 wherein said means for varying the load current drawn from the rectifier (10) is proportioned to produce a load impedance versus voltage characteristic matching the output impedance versus voltage characteristic of said rectifier.

16. An identification and telemetry system comprising:
a signal responding label (4) comprising a label antenna (5, 15, 18) for receiving an interrogation signal at an interrogation frequency and for scattering a reply signal; a generator (8) of said reply signal; a rectifier system (10) containing a diode (16) and providing at least part of the power required by said generator, and
an interrogator (1) comprising a transmitting antenna (3) for transmitting said interrogation signal, a transmitter (2) connected to said transmitting antenna and containing a generator (36) of radio frequency energy, a receiving antenna (3) for receiving said label reply signal, and a receiver (12) connected to said receiving antenna for detecting and decoding said reply signal;
characterised in that said label includes a voltage magnifying resonator (35) containing said diode (16) and having a resonant frequency equal to the interrogation frequency and connected to said label antenna, wherein stored electric energy of said resonator (35) comprises substantially that present in the junction capacitance (C_{D}) of said diode (16).

17. A system as claimed in claim 16 including a termination impedance (6) connected to said label antenna, and means (7) for varying the termination impedance in accordance with said reply signal so that a portion of said interrogation signal is scattered by said label antenna to form a label reply signal.

18. A system as claimed in claim 16 wherein said voltage magnifying resonator (35) contains an inductance (L_{A}) and a capacitance (17).

19. A system as claimed in claim 16 wherein said reply signal contains as its information content a reply message.

20. A system as claimed in claim 17 or 19 wherein the reply signal generator contains an oscillator (9) which is used in forming the label reply signal.

21. A system as claimed in claim 20 wherein said oscillator (9) produces regular oscillations for the period required to produce a complete label reply message.

22. A system as claimed in claim 19 wherein said interrogation signal is pulse modulated to form interrogation pulses.

23. A system as claimed in claim 22 wherein the period of each interrogation pulse is sufficient to receive from said label during said period a complete label reply message.

24. A system as claimed in claim 22 or 23 wherein the interrogator (1) contains means (61, 62) for creating, during an on period of the interrogation signal, a digital record of the reply message, and means (13, 60) for decoding the reply message between interrogation pulses.

25. A system as claimed in claim 16 wherein said receiver (12) includes means (44, 45, 46, 47) for separately detecting in-phase and quadrature components of said reply signal and means (48) for decoding said separately detected components.

26. A system as claimed in claim 16 wherein said reply signal comprises a reply code superimposed on a sub-carrier.

27. A system as claimed in claim 26 wherein said sub-carrier is frequency modulated.

28. A system as claimed in claim 26 wherein said sub-carrier is phase modulated.

29. A system as claimed in claim 16 wherein an interrogation antenna (3) is used as the transmitting antenna and the receiving antenna, and wherein said interrogator (1) includes means for course separation between transmitted and received signals.

30. A system as claimed in claim 29 wherein said means for coarse separation comprises a directional coupler (40).

31. A system as claimed in claim 29 wherein said means for coarse separation comprises a circulator.

32. A system as claimed in claim 16 including means (41) for cancelling residual coupling between said transmitter (2) and said receiver (12).

33. A system as claimed in claim 32 including means (49, 50, 51, 52, 53) for automatically adjusting said cancellation.

34. A system as claimed in claim 33 wherein said interrogation signal is pulse modulated to form interrogation pulses, and automatic adjustment is performed between said interrogation pulses.

35. A system as claimed in claim 16 wherein said interrogator (1) includes means (40) for effecting separation of said reply signal from said transmitted interrogation signal, a receiver (12) connected to said transmitting antenna, means within said receiver (12) for detecting the frequency of said signal scattered from said label antenna and for detecting rapid frequency changes, while ignoring slow frequency changes in said scattered signal, and means for decoding the sequence of detected frequency changes.

36. A system as claimed in claim 35 wherein said means for detecting rapid frequency changes, while ignoring slow frequency changes, comprises a phase locked loop (75).

37. A system as claimed in claim 36 wherein said reply signal comprises a reply code superimposed on a sub-carrier.

38. A system as claimed in claim 37 wherein said sub-carrier is frequency modulated.

## Patentansprüche

1. Auf ein Signal ansprechendes Etikett bzw. Anhänger (4) für ein Identifikations- und Telemetriesystem, wobei der Anhänger aufweist: eine Radiofrequenzantenne (5, 15, 18) für den Empfang eines Abfragesignals mit einer Abfragefrequenz und für die Streuung eines Antwortsignals, einer Erzeugungseinrichtung (8) des Antwortsignals, und einem Gleichrichter (10), der eine Diode (16) enthält, um zumindest einen Teil der von der Erzeugungseinrichtung (8) benötigten Energie bereitzustellen, **dadurch gekennzeichnet**, daß der Anhänger einen spannungsverstärkten Resonator (35) aufweist, welcher die Diode (16) enthält und welcher mit der Antenne verbunden ist und eine Resonanzfrequenz hat, die gleich der Abfragefrequenz ist, wobei die gespeicherte elektrische Energie des Resonators (35) im wesentlichen diejenige aufweist, die in der Übergangskapazität (C_{D}) der Diode (16) vorhanden ist.

2. Auf ein Signal ansprechender Anhänger nach Anspruch 1, wobei der die Spannung verstärkende Resonator (35) eine Induktivität (L_{A}) und eine Kapazität (17) enthält.

3. Auf ein Signal ansprechende Anhänger nach Anspruch 1 oder 2, einschließlich einer Abschlußimpedanz (6), die mit der Antenne verbunden ist und einschließlich von Einrichtungen (7) zum Verändern der Abschlußimpedanz entsprechend dem Antwortsignal, so daß ein Teil des Abfragesignals von der Antenne gestreut wird.

4. Auf ein Signal ansprechender Anhänger nach Anspruch 1 oder 2, wobei der Gleichrichter (10) mit dem Resonator (35) verbunden ist, so daß bei der Frequenz der Abfrageeinrichtung die Impedanz zwischen irgendeinem der Anschlüsse des Gleichrichters (10) und einem der Elemente des Resonators (35) vernachlässigbar ist.

5. Auf ein Signal ansprechender Anhänger nach Anspruch 3, wobei die Einrichtung zum Variieren der Abschlußimpedanz (6) durch den die Spannung verstärkenden Resonator (35) bereitgestellt wird.

6. Auf ein Signal ansprechender Anhänger nach Anspruch 5, wobei die Veränderung in der Abschlußimpedanz (6) bewirkt wird durch Veränderung des dem Gleichrichter (10) entzogenen Laststromes.

7. Auf ein Signal ansprechender Anhänger nach Anspruch 6, wobei die Einrichtungen zum Verändern des Laststromes einen Transistor aufweisen, der mit einem Widerstand (27) in Reihe geschaltet ist.

8. Auf ein Signal ansprechender Anhänger nach einem der Ansprüche 1 oder 2, wobei das Antwortsignal als seinen Informationsgehalt eine Antwortnachricht enthält, und daß das Ausgangssignal des Gleichrichters verwendet wird, um die Aktivität der Erzeugungseinrichtung (8) für einen Zeitraum auszulösen, der ausreichend ist, um zumindest eine vollständige Anhängerantwortnachricht zu erzeugen.

9. Anhänger nach Anspruch 1, wobei die Antenne eine auf ein Magnetfeld ansprechende Antenne ist bzw. aufweist.

10. Anhänger nach Anspruch 1, wobei das Antwortsignal einen einem Unterträger bze. Träger überlagerten Antwortcode aufweist.

11. Anhänger nach Anspruch 10, wobei der Träger frequenzmoduliert ist.

12. Anhänger nach Anspruch 10, wobei der Träger phasenmoduliert ist.

13. Auf ein Signal ansprechender Anhänger nach Anspruch 1, wobei die Strahlungsimpedanz der Antenne der dynamischen Impedanz des die Spannung verstärkenden Resonators (35) gut angepaßt ist.

14. Auf ein Signal ansprechender Anhänger nach Anspruch 1, wobei die Antenne die Form einer magnetischen Schleife (15) annimmt, deren Selbstinduktivität (L_{A}) die Induktivität bereitstellt, welche den die Spannung verstärkenden Resonator (35) bildet.

15. Auf ein Signal ansprechender Anhänger nach Anspruch 7, wobei die Einrichtung zum Verändern des von dem Gleichrichter (10) gezogenen Laststromes so aufgeteilt ist, daß sie eine Charakteristik der Lastimpedanz gegenüber der Spannung erzeugt, welche der Charakteristik der Ausgangsimpedanz gegenüber der Spannung des Gleichrichters angepaßt ist.

16. Identifikations- und Telemetriesystem, mit:
einem auf ein Signal ansprechenden Anhänger (4), welcher eine Anhängerantenne (5, 15, 18) für den Empfang eines Abfragesignales bei einer Abfragefrequenz und zum Streuen eines Antwortsignales aufweist, einen Generator (8) des Antwortsignales, ein Gleichrichtersystem (10), welches eine Diode (16) enthält und welches zumindest einen Teil der von dem Generator benötigten Energie bereitstellt, und
einer Abfrageeinrichtung (1), die eine Sendeantenne (3) aufweist, um das Abfragesignal zu übertragen, einen Sender (2), der mit der Übertragungsantenne verbunden ist und einen Generator bzw. eine Erzeugungseinrichtung (36) für Radiofrequenz enthält, eine Empfangsantenne (3), für den Empfang des Anhängerantwort signales und einen Empfänger (12), der mit der Aufnahmeantenne verbunden ist, um das Antwortsignal zu erfassen und zu dekodieren,
**dadurch gekennzeichnet**, daß der Anhänger bzw. das Etikett einen eine Spannung verstärkenden Resonator (35) aufweist, welcher die Diode (16) verwendet und eine Resonanzfrequenz hat, die gleich der Abfragefrequenz ist, und welcher mit der Anhängerantenne verbunden ist, wobei gespeicherte elektrische Energie des Resonators (35) im wesentlichen diejenige aufweist, die in der Übergangskapazität (C_{D}) der Diode (16) vorhanden ist.

17. System nach Anspruch 16, einschließlich einer Abschlußimpedanz (6), die mit der Anhängerantenne verbunden ist, und einschließlich von Einrichtungen (7) zum Verändern der Abschlußimpedanz entsprechend dem Antwortsignal, so daß ein Teil des Abfragesignals durch die Anhängerantenne gestreut wird, um ein Anhängerantwortsignal zu bilden.

18. System nach Anspruch 16, wobei der die Spannung verstärkende Resonator (35) eine Induktivität (L_{A}) und eine Kapazität (17) aufweist.

19. System nach Anspruch 16, wobei das Antwortsignal als seinen Informationsgehalt eine Antwortnachricht enthält.

20. System nach Anspruch 17 oder 19, wobei die Erzeugungseinrichtung für das Antwortsignal einen Oszillator (9) enthält, der beim Ausbilden des Anhängerantwortsignales verwendet wird.

21. System nach Anspruch 20, wobei der Oszillator (9) während des Zeitraumes, der erforderlich ist, um eine vollständigen Anhängerantwortnachricht zu erzeugen, regelmäßige Oszillationen erzeugt.

22. System nach Anspruch 19, wobei das Abfragesignal pulsmoduliert ist, um Abfragepulse zu bilden.

23. System nach Anspruch 22, wobei die Periode jede Abfragepulses ausreichend ist, um von dem Anhänger während dieser Periode eine vollständige Anhängerantwortnachricht zu empfangen.

24. System nach Anspruch 22 oder 23, wobei die Abfrageeinrichtung (1) Einrichtungen (61, 61) enthält, um während einer An-Periode des Abfragesignals eine digitale Aufzeichnung der Antwortnachricht zu erzeugen, sowie Einrichtungen (13, 60) enthält, um die Antwortnachricht zwischen den Abfragepulsen zu dekodieren.

25. System nach Anspruch 16, wobei der Empfänger (12) Einrichtungen (44, 45, 46, 47) für das getrennte Erfassen von Phasenrichtigen und um 90° phasenversetzten Komponenten des Antwortsignales und Einrichtungen (48) aufweist, um die getrennt erfassten Komponenten zu dekodieren.

26. System nach Anspruch 16, wobei das Antwortsignal einen einem Träger überlagerten Antwortcode aufweist.

27. System nach Anspruch 26, wobei der Träger frequenzmoduliert ist.

28. System nach Anspruch 26, wobei der Träger phasenmoduliert ist.

29. System nach Anspruch 16, wobei eine Abfrageantenne (3) als Sendeantenne und Empfangsantenne verwendet wird, und wobei die Abfrageeinrichtung (1) Einrichtungen aufweist, um hinsichtlich des Ablaufs eine Trennung zwischen gesendeten und empfangenen Signalen vorzunehmen.

30. System nach Anspruch 29, wobei die Einrichtungen zur Grobabtrennung einen Richtungskoppler (40) aufweisen.

31. System nach Anspruch 29, wobei die Einrichtungen zur Grobabtrennung einen Zirkulator aufweisen.

32. System nach Anspruch 16, einschließlich einer Einrichtung (41) für das Auslöschen der verbleibenden Kopplung zwischen Sender (2) und Empfänger (12).

33. System nach Anspruch 32, einschließlich von Einrichtungen (49, 50, 51, 52, 53) zum automatischen Einstellen der Auslöschung.

34. System nach Anspruch 33, wobei das Abfragesignal pulsmoduliert ist, um Abfrageimpulse zu bilden und wobei eine automatische Einstellung zwischen den Abfragepulsen vorgenommen wird.

35. System nach Anspruch 16, wobei die Abfrageeinrichtungen (1) Einrichtungen (40) aufweisen, welche eine Abtrennung des Antwortsignals von dem gesendeten Abfragesignal bewirken, einen Empfänger (12) aufweisen, der mit der Sendeantenne verbunden ist, Einrichtungen in dem Empfänger (12) aufweisen, um die Frequenz des von der Anhängerantenne gestreuten Signales zu erfassen und um schnelle Frequenzwechsel zu erfassen, während langsame Frequenzveränderungen in dem gestreuten Signal ignoriert werden, und Einrichtungen zum Dekodieren der Abfolge der erfaßten Frequenzwechsel aufweisen.

36. System nach Anspruch 35, wobei die Einrichtungen zum Erfassen von schnellen Frequenzwechseln während sie langsame Frequenzwechsel ignorieren, einen PLL-Kreis (phase locked loop) (75) aufweisen.

37. System nach Anspruch 36, wobei das Antwortsignal einen einem Träger überlagerten Antwortcode aufweist.

38. System nach Anspruch 37, wobei der Träger frequenzmoduliert ist.

## Revendications

1. Une étiquette répondant à un signal (4) pour un système d'identification et de télémétrie, ladite étiquette comportant : une antenne radio (5, 15, 18) destinée à recevoir un signal d'interrogation à l'aide d'une fréquence d'interrogation et à diffuser un signal de réponse; un générateur (8) dudit signal de réponse; et un redresseur (10) comportant une diode (16) destiné à fournir une partie au moins de la puissance nécessaire audit générateur (8); caractérisé en ce que ladite étiquette comporte un résonateur à amplification de tension (35) incorporant ladite diode (16), connecté à ladite antenne et doté d'une fréquence de résonance égale à ladite fréquence d'interrogation; dans lequel l'énergie électrique stockée par ledit résonateur (35) comprend principalement celle qui se trouve dans la capacité de jonction (C_{D}) de ladite diode (16).

2. Une étiquette répondant à un signal selon la revendication 1 dans laquelle ledit résonateur à amplification de tension (35) comporte une inductance (L_{A}) et une capacité (17).

3. Une étiquette répondant à un signal selon la revendication 1 ou 2 comportant une impédance de terminaison (6) connectée à ladite antenne et un moyen (7) destiné à faire varier l'impédance de terminaison en conformité avec le signal de réponse de sorte qu'une partie du signal d'interrogation soit diffusée par ladite antenne.

4. Une étiquette répondant à un signal selon la revendication 1 ou 2 dans laquelle le redresseur (10) est connecté audit résonateur (35) de sorte qu'il y ait, à la fréquence de l'interrogateur, une impédance négligeable entre la borne du redresseur (10) et un des éléments du résonateur (35).

5. Une étiquette répondant à un signal selon la revendication 3 dans laquelle ledit moyen destiné à faire varier l'impédance de terminaison (6) est fourni par ledit résonateur à amplification de tension (35).

6. Une étiquette répondant à un signal selon la revendication 5 dans laquelle la variation de l'impédance de terminaison (6) est effectuée par un moyen de variation du courant de charge extrait du redresseur (10).

7. Une étiquette répondant à un signal selon la revendication 6 dans laquelle ledit moyen de variation du courant de charge comporte un transistor (26) en série avec une résistance (27).

8. Une étiquette répondant à un signal selon la revendication 1 ou 2 dans laquelle ledit signal de réponse contient des informations constituant un message de réponse, le signal de sortie du redresseur (10) étant utilisé pour activer ledit générateur (8) pour la durée nécessaire à la génération d'au moins un message complet de réponse d'étiquette.

9. Une étiquette selon la revendication 1 dans laquelle ladite antenne comporte une antenne répondant aux champs magnétiques.

10. Une étiquette selon la revendication 1 dans laquelle ledit signal de réponse comporte un code de réponse superposé à une sous-porteuse.

11. Une étiquette selon la revendication 10 dans laquelle ladite sous-porteuse est modulée en fréquence.

12. Une étiquette selon la revendication 10 dans laquelle ladite sous-porteuse est modulée en phase.

13. Une étiquette répondant à un signal selon la revendication 1 dans laquelle l'impédance de rayonnement de ladite antenne est accordée à l'impédance dynamique du résonateur à amplification de tension (35).

14. Une étiquette répondant à un signal selon la revendication 1 dans laquelle l'antenne est une boucle magnétique (15), dont l'auto-induction (L_{A}) fournit l'inductance constituant le résonateur à amplification de tension (35).

15. Une étiquette répondant à un signal selon la revendication 7 dans laquelle ledit moyen de variation de courant de charge extrait du redresseur (10) est adapté pour produire une caractéristique impédance de charge/tension correspondant à la caractéristique impédance de sortie/tension dudit redresseur.

16. Un système d'identification et de télémétrie comprenant :
une étiquette répondant à un signal (4) comportant une antenne radio (5, 15, 18) destinée à recevoir un signal d'interrogation sur une fréquence d'interrogation et à diffuser un signal de réponse; un générateur (8) dudit signal de réponse; un redresseur (10) comportant une diode (16) destiné à fournir une partie au moins de la puissance nécessaire audit générateur, et
un interrogateur (1) comportant une antenne d'émission (3) destinée à émettre ledit signal d'interrogation, un émetteur (2) connecté à ladite antenne d'émission et comportant un générateur (36) de fréquence radio, une antenne de réception (3) destinée à recevoir ledit signal de réponse, et un récepteur (12) connecté à ladite antenne de réception destiné à détecter et décoder ledit signal de réponse;
caractérisé en ce que ladite étiquette comporte un résonateur à amplification de tension (35) comprenant ladite diode (16), doté d'une fréquence de résonance égale à la fréquence d'interrogation et connecté à ladite antenne d'étiquette, dans lequel l'énergie électrique stockée dudit résonateur (35) comprend principalement celle qui se trouve dans la capacité de jonction (C_{D}) de la dite diode (16).

17. Un système selon la revendication 16 comportant une impédance de terminaison (6) connectée à ladite antenne d'étiquette, et un moyen (7) destiné à faire varier l'impédance de terminaison en conformité avec ledit signal de réponse de sorte qu'une partie dudit signal d'interrogation soit diffusée par ladite antenne d'étiquette constituant ainsi un signal de réponse d'étiquette.

18. Un système selon la revendication 16 dans lequel ledit résonateur à amplification de tension (35) comporte une inductance (L_{A}) et une capacité (17).

19. Un système selon la revendication 16 dans lequel ledit signal de réponse comporte des informations constituant un message de réponse.

20. Un système selon la revendication 17 ou 19 dans lequel le générateur de signal de réponse comporte un oscillateur (9) utilisé pour constituer le signal de réponse d'étiquette.

21. Un système selon la revendication 20 dans lequel ledit oscillateur (9) produit des oscillations régulières pendant la durée nécessaire à l'émission d'un message complet de réponse d'étiquette.

22. Un système selon la revendication 19 dans lequel ledit signal d'interrogation est modulé par impulsion pour créer des impulsions d'interrogation.

23. Un système selon la revendication 22 dans lequel la durée de chaque impulsion d'interrogation est suffisante pour recevoir un message complet de réponse d'étiquette de ladite étiquette pendant ladite durée.

24. Un système selon la revendication 22 ou 23 dans lequel l'interrogateur (1) comporte un moyen (61, 62) destiné à créer, pendant une durée d'activité du signal d'interrogation, un enregistrement numérique du message de réponse, et un moyen (13, 60) destiné à décoder le message de réponse entre les impulsions d'interrogation.

25. Un système selon la revendication 16 dans lequel ledit récepteur (12) comporte un moyen (44, 45, 46, 47) destiné à détecter séparément les composantes en phase et en quadrature dudit signal de réponse et un moyen (48) destiné au décodage desdites composantes séparées qui ont été détectées.

26. Un système selon la revendication 16 dans lequel ledit signal de réponse comporte un code de réponse superposé à une sous-porteuse.

27. Un système selon la revendication 26 dans lequel ladite sous-porteuse est modulée en fréquence.

28. Un système selon la revendication 26 dans lequel ladite sous-porteuse est modulée en phase.

29. Un système selon la revendication 16 dans lequel une antenne d'interrogation (3) sert d'antenne d'émission et d'antenne de réception, et dans lequel ledit interrogateur (1) inclut un moyen de séparation approximatif des signaux émis et reçus.

30. Un système selon la revendication 29 dans lequel le moyen de séparation approximatif comporte un dispositif de couplage directionnel (40).

31. Un système selon la revendication 29 dans lequel ledit moyen de séparation approximatif comporte un circulateur.

32. Un système selon la revendication 16 comportant un moyen (41) pour supprimer le couplage résiduel entre ledit émetteur (2) et ledit récepteur (12).

33. Un système selon la revendication 32 comportant un moyen (49, 50, 51, 52, 53) destiné à régler automatiquement ladite suppression.

34. Un système selon la revendication 33 dans lequel ledit signal d'interrogation est modulé par impulsion pour créer des impulsions d'interrogation, un réglage automatique étant effectué entre lesdites impulsions d'interrogation.

35. Un système selon la revendication 16 dans lequel ledit interrogateur (1) comporte un moyen (40) destiné à réaliser la séparation dudit signal de réponse et dudit signal d'interrogation émis, un récepteur (12) connecté à ladite antenne d'émission, un moyen dans ledit récepteur (12) destiné à détecter la fréquence dudit signal diffusé par ladite antenne d'étiquette et à détecter des variations rapides de fréquence, sans prendre en compte les variations lentes de fréquence dudit signal diffusé, et un moyen de décodage des variations successives de fréquence détectées.

36. Un système selon la revendication 35 dans lequel ledit moyen de détection des variations rapides de fréquence, sans prendre en compte les variations lentes de fréquence, comporte une boucle à verrouillage de phase (75).

37. Un système selon la revendication 36 dans lequel ledit signal de réponse comporte un code de réponse superposé à une sous-porteuse.

38. Un système selon la revendication 37 dans lequel ladite sous-porteuse est modulée en fréquence.
